(19) Europäisches Patentamt
European Patent Office
Office européen des brevets

(11) **EP 1 655 535 A1**

(12) **DEMANDE DE BREVET EUROPEEN**

(43) Date de publication:
**10.05.2006 Bulletin 2006/19**

(51) Int Cl.:
*F21V 7/00* (2006.01)   *F21V 5/00* (2006.01)
*B60Q 1/00* (2006.01)

(21) Numéro de dépôt: **05292091.5**

(22) Date de dépôt: **07.10.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **04.11.2004 FR 0411785**

(71) Demandeur: **VALEO VISION**
**93012 Bobigny Cédex (FR)**

(72) Inventeurs:
• **Albou, Pierre**
**75013 Paris (FR)**
• **Reiss, Benoît**
**95210 Saint Gratien (FR)**

(54) **Projecteur lumineux, pour véhicule automobile, donnant un faisceau à coupure**

(57)   L'invention a pour objet un projecteur lumineux, pour véhicule automobile, donnant un faisceau à coupure, en particulier du type anti-brouillard, admettant un axe optique (Y-Y) et comprenant une source lumineuse (2) comportant un filament (2a) dont la forme générale est sensiblement cylindrique et dont l'axe est de préférence sensiblement horizontal, ledit filament s'étendant obliquement ou perpendiculairement à l'axe optique du projecteur, et au moins un réflecteur (A,B,D1,D2,C) donnant un faisceau lumineux réfléchi à coupure. Le projecteur comporte, devant la source lumineuse (2), une lentille (L) déterminée pour donner un faisceau lumineux à coupure.

FIG.2

**Description**

L'invention est relative à un projecteur lumineux, pour véhicule automobile, donnant un faisceau à coupure, projecteur du genre de ceux qui admettent un axe optique et comprennent une source lumineuse, dont la forme générale peut être sensiblement sphérique ou cylindrique, comportant un filament d'axe sensiblement horizontal et s'étendant obliquement ou perpendiculairement à l'axe optique du projecteur, et au moins un réflecteur donnant un faisceau lumineux réfléchi à coupure.

L'invention concerne plus particulièrement, mais non exclusivement, un projecteur lumineux du type anti-brouillard.

Les brevets FR-A-2 774 150 ou EP 933 585 montrent un projecteur de ce type avec des réflecteurs dont la surface est déterminée pour assurer le faisceau à coupure, c'est-à-dire que les rayons lumineux du faisceau réfléchi se trouvent essentiellement au-dessous d'une ligne de coupure qui peut être horizontale, ou qui peut être formée par une ligne brisée dans le cas d'un projecteur code. La source lumineuse utilisée est assez puissante pour que la fraction de la lumière émise vers l'arrière en direction du réflecteur suffise pour produire le faisceau lumineux souhaité. Pour éviter que la lumière émise vers l'avant par la source lumineuse crée un éblouissement par observation directe, on prévoit généralement un cache situé devant la source lumineuse. Une partie du flux lumineux n'est donc pas utilisée pour le faisceau d'éclairage, ce qui n'empêche pas de satisfaire aux conditions de photométrie pour le faisceau lumineux dans le cas d'une source de forte puissance.

La chaleur dégagée par une telle source lumineuse de forte puissance d'une part nécessite de fermer le boîtier du projecteur avec une glace en verre pour tenir à la température élevée et, d'autre part, impose une distance relativement importante entre la source lumineuse et la glace, ce qui entraîne un encombrement important du boîtier en profondeur.

L'invention a pour but, surtout, de fournir un projecteur lumineux du genre défini précédemment qui permette d'obtenir un faisceau lumineux satisfaisant avec une source lumineuse de puissance relativement faible, et qui soit relativement compact. On souhaite également que l'échauffement due à la source lumineuse soit suffisamment faible pour permettre d'utiliser une glace en matière plastique sous encombrement réduit.

L'invention a également pour but de fournir un projecteur lumineux qui permette un réglage simple et rapide de la coupure du faisceau suivant la direction verticale.

L'invention concerne un projecteur lumineux, pour véhicule automobile, donnant un faisceau à coupure, en particulier du type anti-brouillard, admettant un axe optique et comprenant une source lumineuse comportant un filament dont la forme générale est sensiblement cylindrique, avec l'axe dudit filament de préférence sensiblement horizontal, ledit filament s'étendant obliquement ou perpendiculairement à l'axe optique du projecteur, et au moins un réflecteur donnant un faisceau lumineux réfléchi à coupure. Le projecteur selon l'invention comporte en outre, devant la source lumineuse (2), une lentille (L) déterminée pour donner un faisceau lumineux à coupure.

On comprend au sens de l'invention par source lumineuse le composant global du type lampe, comportant au moins un filament émetteur de lumière, et une enveloppe transparente. Cette enveloppe peut être par exemple de forme de type cylindrique ou sphérique. Quant au filament émetteur, il s'agit généralement d'un fil sous forme d'un enroulement hélicoidal par exemple, mais dont on approxime la forme générale, l'enveloppe, de façon connue dans ce domaine, par un cylindre.

Ainsi, la lumière émise directement vers l'avant par la source lumineuse est récupérée par la lentille et insérée dans le faisceau, sans provoquer l'éblouissement d'un automobiliste venant en sens inverse. Grâce à cette récupération d'une partie du flux lumineux, la source lumineuse peut être de faible puissance et fournir un flux inférieur à celui que génère une lampe de type code, utilisée usuellement également pour une fonction antibrouillard, en particulier inférieur à 1000 lumens, notamment inférieur ou égale à 900 ou 600 lumens, tout en permettant d'obtenir une photométrie satisfaisante.

De préférence, la lentille est déterminée de telle manière que les rayons incidents extrêmes soient réfractés, en sortie de la lentille, sensiblement parallèlement à l'axe optique, tandis que les autres rayons lumineux émis par le reste de la source sont réfractés avec une inclinaison vers le bas par rapport audit axe optique.

Généralement, la source lumineuse est orientée perpendiculairement à l'axe optique, mais l'angle entre l'axe géométrique de la source lumineuse et l'axe optique pourrait être différent de 90°.

De préférence, la source lumineuse est montée fixe par rapport au boîtier du projecteur ; les réflecteurs et la lentille sont solidaires entre eux et sont montés rotatifs autour de l'axe géométrique de la source lumineuse pour le réglage vertical de la coupure.

La source lumineuse peut être constituée par une lampe à filament axial, disposée transversalement. Le projecteur peut être réalisé en matière plastique, en particulier thermoplastique.

La surface d'entrée de la lentille peut être plane, rectangulaire et verticale. La face de sortie de la lentille peut être "fresnelisée", c'est-à-dire du type lentille de Fresnel dans le sens vertical et dans le sens horizontal. La face de sortie de la lentille présente des pavés ou blocs permettant d'obtenir le faisceau souhaité avec une lentille d'épaisseur réduite. La face de sortie de la lentille peut présenter un maillage en pavés suivant deux familles de courbes.

La lentille est dissymétrique haut et bas et est courbée en vue de dessus.

Le réflecteur peut comprendre au moins quatre secteurs (ou réflecteurs) élémentaires dont deux premiers secteurs s'étendent de part et d'autre de l'axe optique, respectivement au-dessus et au-dessous du plan horizontal passant par l'axe optique, les deux autres secteurs étant compris entre les deux premiers et situés respectivement au-dessus et au-dessous de ce plan.

Les deux premiers secteurs sont prévus pour que les rayons réfléchis contournent les obstacles constitués par la lentille, et la source lumineuse.

Le secteur du réflecteur situé vers l'extérieur peut être associé à un second secteur non jointif de focale plus grande.

Les secteurs situés de part et d'autre du plan horizontal passant par l'axe optique sont des parties d'un unique réflecteur. Ces secteurs ont une focale inférieure à celle des deux autres secteurs de manière à être placés en avant des secteurs latéraux, en particulier pour réaliser des raccords placés dans l'ombre des secteurs haut et bas et ne créant pas d'éblouissements.

Les focales des secteurs sont de préférence égales ou inférieures à 15 mm quand on privilégie la compacité du réflecteur.

Selon un autre aspect, l'invention concerne également un dispositif d'éclairage et/ou de signalisation pour véhicule automobile comprenant un projecteur lumineux tel que décrit brièvement ci-dessus et au moins une source lumineuse supplémentaire dédiée à la réalisation d'une autre fonction d'éclairage et/ou signalisation.

Selon une forme de réalisation particulière, le projecteur lumineux réalise une fonction d'anti-brouillard et l'autre fonction d'éclairage et/ou signalisation est une fonction de signalisation diurne.

De préférence, la source lumineuse supplémentaire est montée parallèlement ou transversalement à l'axe optique du dispositif.

Selon une autre caractéristique particulière, le dispositif comprend un boîtier avec une surface intérieure ayant au moins une partie réfléchissante apte à réfléchir des faisceaux lumineux émis directement ou indirectement par la source lumineuse supplémentaire.

Selon encore une autre caractéristique, le dispositif comprend une lentille associée à la source lumineuse supplémentaire et formant un prolongement de la lentille du projecteur lumineux.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs.

Sur ces dessins :

Fig. 1 est une vue de face schématique d'un projecteur lumineux selon l'invention destiné à être monté sur un véhicule.

Fig. 2 est une vue de dessus du projecteur de Fig. 1.

Fig. 3 est une coupe horizontale schématique du projecteur selon l'invention.

Fig. 4 est une coupe verticale schématique du projecteur selon l'invention.

Fig. 5 est une coupe verticale schématique d'une lentille stigmatique avec un filament à son foyer.

Fig. 6 est une coupe verticale schématique d'une lentille selon l'invention.

Fig. 7 est une vue schématique de dessus de la face d'entrée de la lentille et de plans verticaux passant par le centre de la source et formant des angles différents avec l'axe optique.

Fig. 8 est une vue en élévation de la source lumineuse et de la face rectangulaire d'entrée de la lentille.

Fig. 9 est un schéma à plus grande échelle de la projection de la source lumineuse sur un plan oblique d'incidence, avec rayons incidents extrêmes sur la face d'entrée de la lentille.

Fig. 10 est une coupe verticale partielle à plus grande échelle de la lentille.

Fig. 11 est une vue en perspective de l'avant de la lentille et de la source lumineuse.

Fig. 12 illustre les courbes isolux obtenues avec la lentille seule,

Fig. 13 illustre les courbes isolux du faisceau complet obtenu avec la lentille et le réflecteur.

Fig. 14A est une vue en coupe illustrant un dispositif d'éclairage et/ou signalisation intégrant un projecteur lumineux selon l'invention,

Fig. 14B est une vue en coupe illustrant une variante du dispositif d'éclairage et/ou signalisation de la Fig. 14A,

Figs. 14C et 14D sont des vues en coupe et de face illustrant encore une autre variante du dispositif d'éclairage et/ou signalisation de la Fig. 14A, et

Fig. 14E est une vue en coupe illustrant encore une autre variante du dispositif d'éclairage et/ou signalisation de la Fig. 14A.

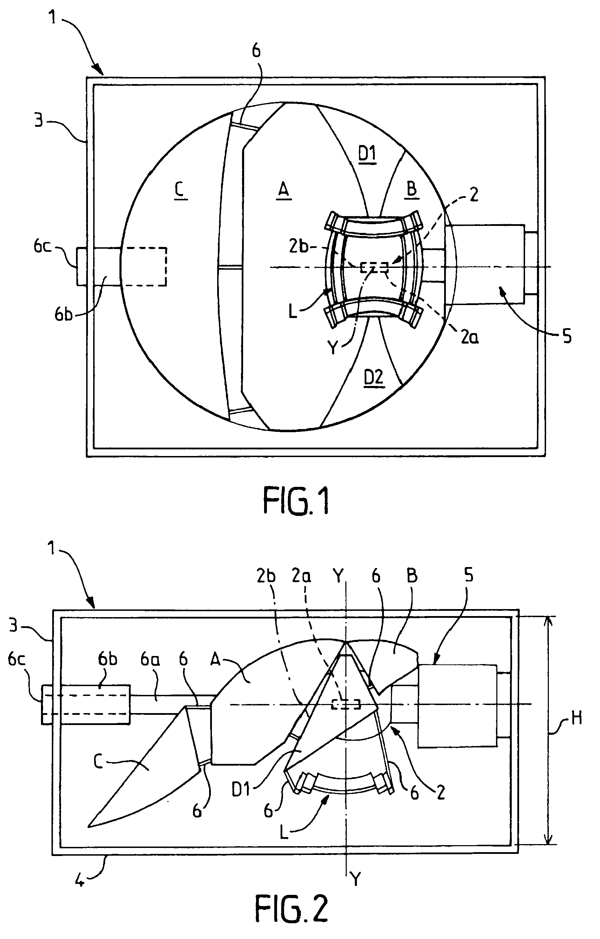

En se reportant à Figs. 1 et 2 des dessins, on peut voir, schématiquement représenté, un projecteur lumineux 1 pour véhicule automobile, destiné à être monté à l'avant du véhicule. Le projecteur 1 est prévu pour donner un faisceau lumineux à coupure. Il s'agit en particulier d'un projecteur antibrouillard, mais l'invention peut s'appliquer à des projecteurs lumineux à coupure d'un autre type, par exemple projecteur code.

Le projecteur 1 admet un axe optique Y-Y et comprend une source lumineuse 2 ayant un filament 2a de forme générale cylindrique, d'axe géométrique 2b essentiellement horizontal, s'étendant transversalement à l'axe optique Y-Y. Dans l'exemple représenté, l'axe géométrique 2b du filament 2a est orthogonal à l'axe Y-Y. En variante, l'axe 2b pourrait s'étendre obliquement et faire un angle différent de 90° avec l'axe optique Y-Y.

Le projecteur comporte un boîtier 3 dans lequel est montée la source 2, ce boîtier étant fermé vers l'avant par une glace 4. Le boîtier 3 est fixé à la structure du véhicule. Le support 5 de la source lumineuse est fixé de manière étanche au boîtier du projecteur.

La source lumineuse 2 est une source de faible puissance. Elle est constituée notamment par une lampe ayant une enveloppe ou ballon transparent de forme sensiblement sphérique ou en ellipsoïde. La lampe comporte un filament axial 2a donnant un flux inférieur ou égal à 600 lumens, de préférence inférieur à 400 lumens. Une telle lampe, du type de celles utilisées pour les feux de signalisation, a une puissance inférieure à celle des lampes utilisées normalement pour un faisceau d'éclairage, notamment antibrouillard. Un exemple de source 2 est constitué par une lampe du type PS 24, qui ne comporte pas de masque sur une partie du filament.

La faible puissance de la source 2 entraîne un moindre échauffement du projecteur de sorte que la glace 4 peut être rapprochée du filament 2a. Ceci, combiné avec la disposition transversale de la source 2, permet de réduire la profondeur H (Fig.2) du projecteur, c'est-à-dire sa dimension suivant une direction parallèle à l'axe optique. De plus, la glace 4 peut être réalisée en matière plastique du fait de l'échauffement moindre.

Le projecteur comporte un réflecteur composé de plusieurs secteurs réflecteurs A, B, D1, D2 et éventuellement C.

Une lentille L est disposée en avant de la source lumineuse 2, suivant la direction de propagation du faisceau lumineux. La lentille L est déterminée pour donner un faisceau lumineux à coupure. La lentille L permet ainsi de récupérer la lumière émise directement vers l'avant par la source 2, sans provoquer l'éblouissement d'un automobiliste venant en sens inverse.

Les secteurs réflecteurs A, B, D1, D2 et éventuellement C, ainsi que la lentille L sont rendus solidaires entre eux par des moyens de liaison 6 schématiquement représentés. Les secteurs et la lentille L sont montés mobiles en rotation autour de l'axe géométrique 2b du filament 2a pour permettre un réglage vertical de la coupure du faisceau lumineux, sans avoir à déplacer le boîtier 3 ni la source 2. Le montage en rotation est réalisé, par exemple, à l'aide d'un arbre 6a, solidaire des secteurs, engagé libre en rotation dans un manchon 6b coaxial à 2b, prévu sur une paroi du boîtier. L'arbre 6a peut sortir du boîtier pour être lié à une commande 6c permettant le réglage de l'extérieur.

Chaque secteur réflecteur est de la famille des réflecteurs à surface complexe SC définis dans la demande de brevet FR-A-2 774 150 au nom de la société Demanderesse ; on peut se reporter à ce document pour plus de détails. On rappellera les points principaux concernant ces réflecteurs.

Les surfaces optiques pour tous les secteurs réflecteurs ont la propriété de créer un faisceau lumineux réfléchi avec une ligne de coupure plate, ou éventuellement brisée. Généralement, la ligne de coupure est horizontale et le faisceau lumineux est situé au-dessous de cette ligne.

Un principe de construction approprié de chaque secteur est exposé dans le brevet FR-A-2 774 150.

## Secteurs A et B

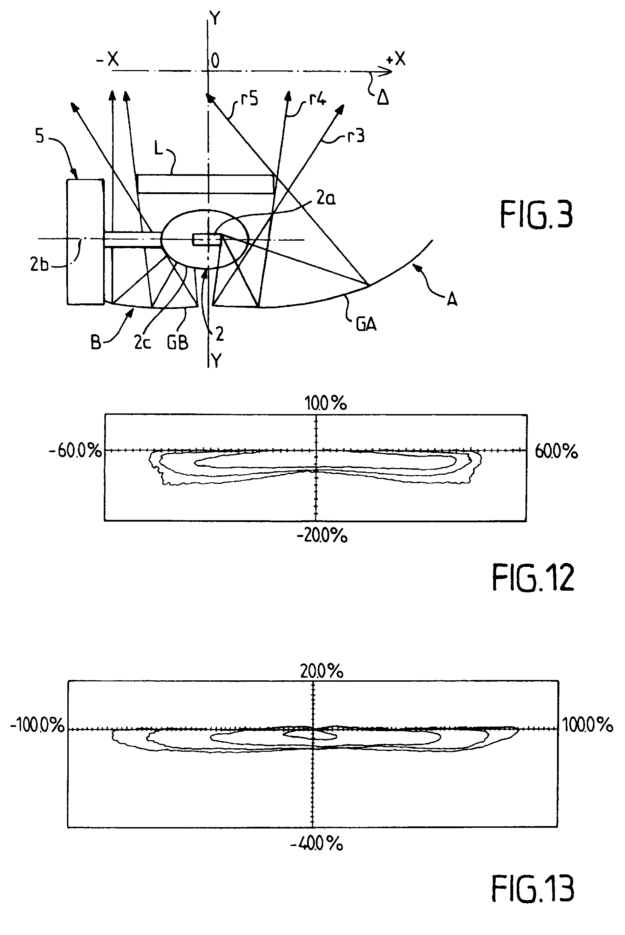

Compte tenu de la présence de la lentille L devant la lampe 2 (voir Fig.3) il convient d'éviter le plus possible que les rayons réfléchis par les secteurs du réflecteur, notamment les secteurs A et B, traversent le ballon 2c de la lampe. En effet les rayons, selon leur direction, risqueraient d'être déviés par la lentille L vers le haut et de créer des éblouissements inacceptables. En outre les rayons qui seraient réfléchis par le ballon 2c de la lampe 2 doivent être considérés comme perdus ou nuisibles, car le ballon 2c provoque des déviations incontrôlées pour des rayons qui ne proviennent pas directement du filament 2a. Il convient donc de contourner également le ballon 2c.

Les génératrices des secteurs, notamment les génératrices GA, GB pour les secteurs A, B sont choisies de façon que les rayons réfléchis tels que r3 dans une construction optique à deux dimensions (ou 2D), dans le plan $\Pi$, passent autour des éléments gênants constitués par la lentille L et le ballon 2c.

## Construction de la génératrice GA du secteur A

La partie droite de Fig.3 représente un cas limite où les rayons réfléchis tels que r3, r4, r5 sont tangents aux obstacles constitués par la lentille L et le ballon 2c.

Dans une construction pratique, les rayons réfléchis ont en général des déviations plus élevées suivant les valeurs positives +x le long d'une direction $\Delta$ orthogonale à l'axe optique Y-Y. Les valeurs +x correspondent à une déviation vers l'extérieur, c'est-à-dire vers la droite dans le cas du projecteur droit du véhicule comme illustré sur Fig. 3, à l'exception éventuelle de r3. La courbe génératrice GA est construite de façon à optimiser la répartition de la lumière dans le faisceau, sous réserve des limites décrites précédemment.

Pour une distance donnée F du point initial de la génératrice GA sur l'axe Y jusqu'à l'arrière du filament 2a, la dimension du ballon 2c de la lampe impose la déviation minimale possible pour r3. La distance F est choisie de préférence faible, notamment inférieure ou égale à 15 mm, et de ce fait le rayon r3 correspond à une déviation horizontale importante ; il est souvent inutile, compte tenu de la largeur du faisceau souhaité (et imposé par une réglementation R19-3) de prévoir une déviation plus grande.

On peut noter que dans la construction exposée ci-dessus, le point source des rayons considérés est, jusqu'au droit de l'extrémité du filament 2a, le coin inférieur droit (vers le réflecteur et du côté de la génératrice GA considérée) de la projection du filament sur le plan Π et, au-delà, le coin supérieur droit (vers la lentille L, du côté du secteur construit).

Le secteur A de réflecteur construit est limité par un plan vertical contenant le rayon r3 pour étendre à la surface les propriétés de la construction en vue de dessus.

Avantageusement, la génératrice GA du secteur A est telle que ce secteur réfléchissant participe essentiellement à la construction du faisceau dans la partie +x de la direction Δ.

**Construction de la génératrice du secteur B.**

En raison de la présence du système de fixation et de positionnement 5 (Fig.3) qui constitue une partie opaque du boîtier, dont on peut considérer qu'elle définit la position d'une des parois latérales de l'appareil, le secteur B est conçu de manière à éclairer presque exclusivement vers l'intérieur, c'est-à-dire sur la partie -x de la direction Δ. Dans le cas du projecteur pour côté droit de Fig.3 la partie -x correspond à la partie située à gauche de l'axe optique Y-Y.

Les distances focales des génératrices GA, GB des secteurs A et B sont avantageusement égales, de sorte que les deux génératrices ont un point en commun en x=0. Ceci n'est pas indispensable, mais facilite la création de raccords à éblouissements minimaux.

**Construction des secteurs D1, D2.**

Les secteurs D1, D2 sont des fractions, découpées comme exposé ci-après, d'un unique réflecteur. La courbe génératrice de cet unique réflecteur est choisie avec une distance focale inférieure à celle des secteurs A et B de sorte que les surfaces des secteurs D1, D2 sont placées en avant des secteurs latéraux A, B comme visible sur Fig.2. Ceci permet de réaliser des raccords, pour solidariser les différents secteurs entre eux, placés dans l'ombre des secteurs D1, D2 et ne créant donc pas d'éblouissement.

Le réflecteur complet est tout d'abord limité par les projections suivant l'axe optique Y-Y des contours des secteurs A et B. En fait il faut prévoir des angles de dépouille pour le démoulage de la pièce complète réalisée notamment en matière plastique, ce qui impose de prendre des axes de projection inclinés par rapport à l'axe optique Y-Y dans le plan Π.

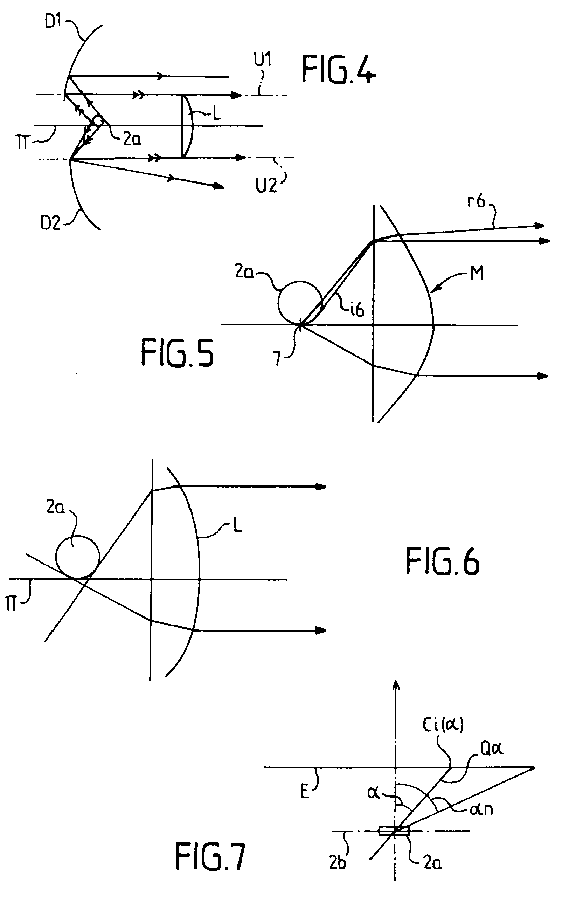

Le réflecteur résultant, correspondant aux deux secteurs D1, D2, vu de l'arrière ou de face présente une forme en sablier (voir Fig.1). Ce réflecteur est ensuite découpé par un plan horizontal U2 (Fig.4) passant par le point le plus bas de la lentille L, ce qui définit le secteur D2. Tout rayon horizontal qui viendrait du réflecteur et qui passerait entre le plan Π et le plan U2 serait dévié vers le haut par la lentille L et serait source d'éblouissement.

Le secteur D1 est limité, en partie basse, par un plan situé au-dessus du plan Π , de telle sorte qu'aucun rayon réfléchi par D1 n'atteigne la lentille L au-dessous de son intersection avec le plan Π. En pratique, le secteur D1 est limité par le plan horizontal U1 passant par le point le plus haut de la lentille L (Fig.4).

La courbe génératrice du réflecteur correspondant aux secteurs D1 et D2 a été choisie, dans un exemple de réalisation, de façon à éclairer tout le champ défini par la norme d'éclairage, mais ce n'est pas indispensable.

**Construction du secteur C**

Compte tenu de la faible valeur choisie pour la distance F de la génératrice GA, le secteur A devient rapidement profond lorsque l'on s'écarte transversalement de l'axe optique.

Si l'on dispose d'une surface apparente suffisante, il est avantageux de « fresneliser», c'est-à-dire de fragmenter le secteur A en créant un second secteur C non jointif avec foyers confondus. Le secteur C est de focale plus grande et se trouve moins en avant, suivant la direction de l'axe optique, que le prolongement du secteur A. Le décrochement entre les secteurs A et C est effectué suivant l'axe 2b du filament 2a. Une liaison mécanique 6 entre les secteurs A et C est alors assurée de préférence dans le prolongement du filament 2a comme schématiquement illustré sur Fig.2. En effet, la lampe 2 n'émet que très peu d'énergie dans cette direction et les raccords sont alors faciles à concevoir, avec en outre très peu de perte.

Le secteur C reçoit peu d'énergie lumineuse, mais procure un faisceau extrêmement mince, car le filament 2a est vu sous des angles faibles. Ceci permet de renforcer la lumière sous la ligne de coupure proportionnellement au niveau plus bas dans le faisceau, ce qui est favorable au respect d'une future norme d'éclairage R19-3 (rapport entre lignes).

Les distances focales des différents secteurs, notamment la distance focale des secteurs A et B, sont choisies courtes de préférence inférieures ou égales à 15mm afin de mieux envelopper le filament 2a dans un plan vertical : les images ainsi obtenues restent de taille moyenne et utilisables sur toute la hauteur des réflecteurs, compte tenu de l'orientation transverse du filament.

**Lentille récupératrice L.**

Le filament transverse 2a émet presque autant d'énergie vers la glace 4 que vers le réflecteur placé derrière. La lentille L permet de récupérer l'énergie émise vers la glace tout en créant une ligne de coupure pour éviter les éblouissements résultant de l'observation directe du filament, cette observation ayant lieu en outre dans une direction où l'indicatrice d'émission du filament est maximale.

Fig.5 est un schéma en coupe verticale d'une lentille classique plan convexe M stigmatique admettant un foyer 7. Si l'on place le filament transversal 2a tangent inférieurement en 7 au plan horizontal passant par le foyer, il apparaît que des rayons tels que i6 provenant de points du filament situés en avant du foyer 7 seront réfractés suivant des rayons montants tels que r6 qui vont créer des éblouissements, ce qui n'est pas acceptable.

Pour résoudre ce problème, selon l'invention comme illustré sur Fig.6, la lentille L est déterminée pour fournir un faisceau sortant qui ne comporte pas de rayon montant et qui présente ainsi une coupure horizontale.

Compte tenu des dimensions du projecteur, la lentille L travaille horizontalement à ouverture élevée (supérieure à 1). De ce fait il n'est pas possible d'utiliser une lentille cylindrique dont les parties latérales engendreraient des rayons montants.

La construction de la lentille L selon l'invention est exposée ci-après.

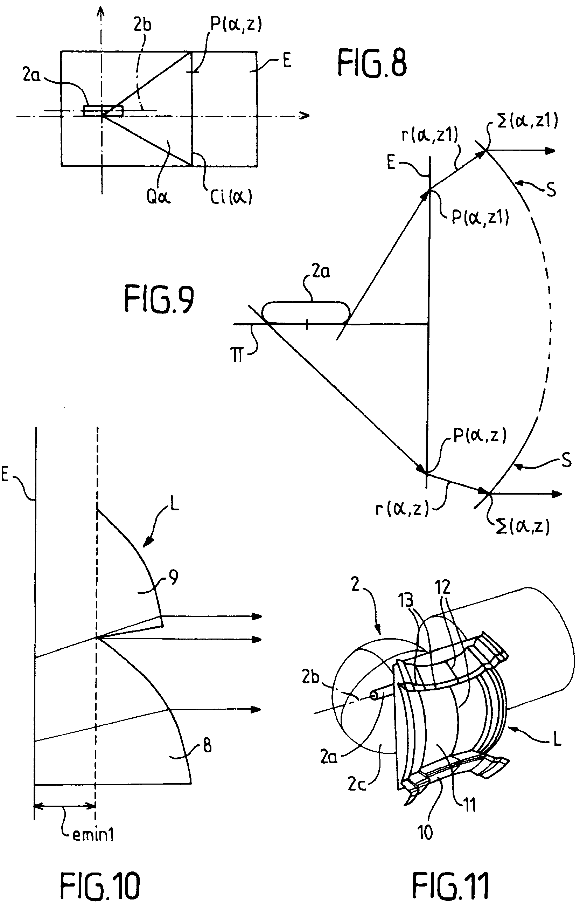

En se reportant à Fig.7 et 8, on peut voir la surface d'entrée E de la lentille L, qui est choisie arbitrairement. Dans le cas présent la surface E est choisie plane, rectangulaire et verticale. En outre cette surface E est parallèle à l'axe géométrique 2b du filament. On considère un plan vertical $Q\alpha$ qui passe par le centre du filament 2a et qui forme un angle $\alpha$ avec l'axe optique Y-Y. L'angle $\alpha$ peut varier de 0 à la valeur $\alpha n$ correspondant à l'un des bords verticaux de la face d'entrée E.

On désigne par $Ci(\alpha)$ l'intersection verticale du plan $Q\alpha$ avec le plan de la face d'entrée E, et par $P(\alpha,z)$ un point d'altitude z situé sur $Ci(\alpha)$.

Pour chaque point $P(\alpha,z)$ on construit un rayon incident en ce point, issu de la projection du filament 2a dans le plan $Q\alpha$, comme illustré sur Fig.9. Le rayon incident est contenu dans le plan $Q\alpha$.

La projection orthogonale du filament 2a dans le plan $Q\alpha$ présente des extrémités en arc d'ellipse.

La lentille L est déterminée de telle manière qu'en un point donné de sa surface de sortie *S* il y ait toujours au moins un rayon émergent horizontal tandis que les autres rayons émergents sont tous descendants.

Aux points d'extrémité $P(\alpha,z)$ et P1 $(\alpha,z1)$, dans le sens vertical, de la face d'entrée de la lentille, correspondent les rayons incidents extrêmes tangents respectivement aux contours extrêmes arrière et avant du filament 2a.

On peut noter que l'extrémité du filament 2a à prendre en compte pour le haut et le bas de la lentille est l'extrémité opposée à celle utilisée pour la construction de la partie correspondante des secteurs réflecteurs.

On calcule ensuite le rayon $\overrightarrow{r_i}(\alpha,z)$ réfracté par E en $P(\alpha, z)$ (si $\alpha \neq 0$, ce rayon est en dehors du plan $Q(\alpha)$).

On écrit alors que la réfraction par la face de sortie S de la lentille du rayon $(P(\alpha,z), \overrightarrow{r_i}(\alpha,z))$ est un rayon horizontal, ce qui correspond à une équation aux dérivées partielles de la surface de sortie S recherchée, considérée comme une fonction de $\alpha$ et de z.

La surface solution existant, on peut la calculer progressivement (et le résultat, aux imprécisions dues au pas de discrétisation près, ne dépend pas de la méthode de construction choisie). On décrit ci-dessous deux méthodes qui donnent satisfaction.

Pour $\alpha$ quelconque, on note :

*S* la surface de sortie recherchée,

$S(\alpha)=\{\Sigma(\alpha,z)\in S, \forall z\}$, $S(\alpha)$ est une courbe sur S qui est le lieu des points $\Sigma(\alpha,z)$ constituant des impacts, sur la face *S,* des rayons réfractés le long de $C_i(\alpha)$

$\overrightarrow{n}(\alpha,z)$, la normale à S en un point $\Sigma(\alpha,z)$.

On pose

$$\Sigma(\alpha,z) = P(\alpha,z) + \mu \cdot \vec{r}(\alpha,z)$$

Dans les deux cas, on part de la construction en $\alpha = 0$.

$\vec{r}(0,z) \in Q(0), \forall z$ et la construction des points correspondants de la face de sortie est un problème en deux dimensions ($S(0)$ c $Q(0)$ et $\vec{n}(0,z) \in Q(0), \forall z$).

$S(0)$, considérée comme une fonction de z, est alors solution d'une simple équation différentielle, qui peut être résolue par une méthode classique.

Soit $d\alpha$ et dz les pas du calcul,

Soit $\alpha \neq 0$ :

$S(\alpha\text{-}d\alpha)$ est connue

$\forall z, n(\alpha\text{-}d\alpha,z)$ est également connu

**1ère méthode :**

On écrit que

$$\vec{n}(\alpha,z) = \overrightarrow{\Sigma(\alpha,z)\Sigma(\alpha-d\alpha,z)} \wedge \overrightarrow{\Sigma(\alpha,z)\Sigma(\alpha-d\alpha,z-dz)}$$

et l'écriture de la condition d'horizontalité du rayon réfracté en un point $\Sigma(\alpha,z)$ est alors une simple équation en $\mu$.

**2ème méthode :**

On écrit que

$$\overrightarrow{\Sigma(\alpha,z)\Sigma(\alpha-d\alpha,z)} \perp \vec{n}(\alpha-d\alpha,z) \text{ ,}$$

ce qui constitue une simple équation en $\mu$.

L'écriture de la condition d'horizontalité du rayon réfracté en un point $\Sigma(\alpha,z)$ permet alors de calculer $n(\alpha,z)$.

On désigne par $H(z)$ la courbe correspondant à la section, par un plan horizontal d'altitude z, de la face de sortie S de la lentille L.

La construction de la courbe $H(0) = \{\Sigma(\alpha,0), \forall \alpha\}$, qui est la section de la face de sortie S par le plan horizontal $\Pi$ d'altitude z=0, est un problème en deux dimensions ($\vec{r}(\alpha,0) \in \Pi$, $\vec{n}(\alpha,0) \in \Pi$), que la condition d'horizontalité des rayons en sortie ne permet pas de résoudre (écrire cette condition le long de *H(0)* est équivalent à 0 = 0). *H(0)* semble donc au premier abord un paramètre permettant de contrôler la répartition horizontale de la lumière dans le faisceau engendré (par analogie avec *G*). Toutefois, si l'équation aux dérivées partielles globale est effectivement soluble, les deux méthodes ci-dessus doivent conduire à des solutions identiques lorsque $d\alpha \to 0$ et $dz \to 0$ et la seconde méthode tend vers une courbe *H(0)* perpendiculaire aux rayons ($P(\alpha,0)$, $\vec{r}(\alpha,0)$). Dans le cadre de la première méthode, on voit qu'il faut calculer *H(0)* préalablement (la formule donnée plus haut ne permettant pas de calculer $\vec{n}(\alpha,0), \forall \alpha$) : la solution est alors donnée par la considération précédente (courbe perpendiculaire aux rayons). On voit ainsi que *H(0)* n'est pas un paramètre.

Les paramètres sont donc finalement, pour une surface d'entrée E donnée (E constitue un paramètre, mais difficile à manier : en pratique on ne considère que des entrées planes perpendiculaires à l'axe optique du système) :

- la déviation horizontale et

- $\mu$ pour le point $\Sigma(0,0)$.

Si la déviation choisie est nulle, $\mu$ est l'épaisseur au centre, et il est nécessaire de choisir une déviation horizontale nulle au centre pour obtenir une surface de sortie lisse (ce qui n'est pas indispensable, mais a été préféré dans les réalisations).

**Aspect de la lentille L.**

La lentille L obtenue ci-dessus donne satisfaction d'un point de vue optique. Elle est dissymétrique haut et bas et elle est courbée en vue de dessus (cf. construction de *H(z)*).La lentille L est d'épaisseur importante lorsque ses dimensions et sa position sont choisies de manière à bien s'intégrer dans l'application considérée (lampe PS24, anti-brouillard compact). On a donc été amené à segmenter la lentille en pavés ou blocs comme une lentille de Fresnel, c'est-à-dire à « fresneliser » la lentille récupératrice L.

Une première opération, classique, illustrée sur Fig.10 en projection dans un plan vertical, peut être réalisée simplement lors du calcul des courbes $S(\alpha)$, en prolongeant judicieusement, en trois dimensions, les rayons limites correspondant à l'épaisseur minimum acceptable emin1 (l'épaisseur au centre est choisie volontairement faible, dans l'intérêt du procédé d'injection). On crée ainsi des pavés 8, 9 limités vers l'avant par une surface convexe. Les pavés se succèdent verticalement avec des décrochements.

Cette opération seule ne permet qu'une diminution négligeable de l'épaisseur globale de la lentille car les sections horizontales formées par les courbes $H(z) = \{\Sigma(\alpha,z) \in S, \forall \alpha\}$ se referment également rapidement vers la face d'entrée, notamment vers le haut de la lentille.

Le procédé est appliqué également aux lignes $H(z)$.

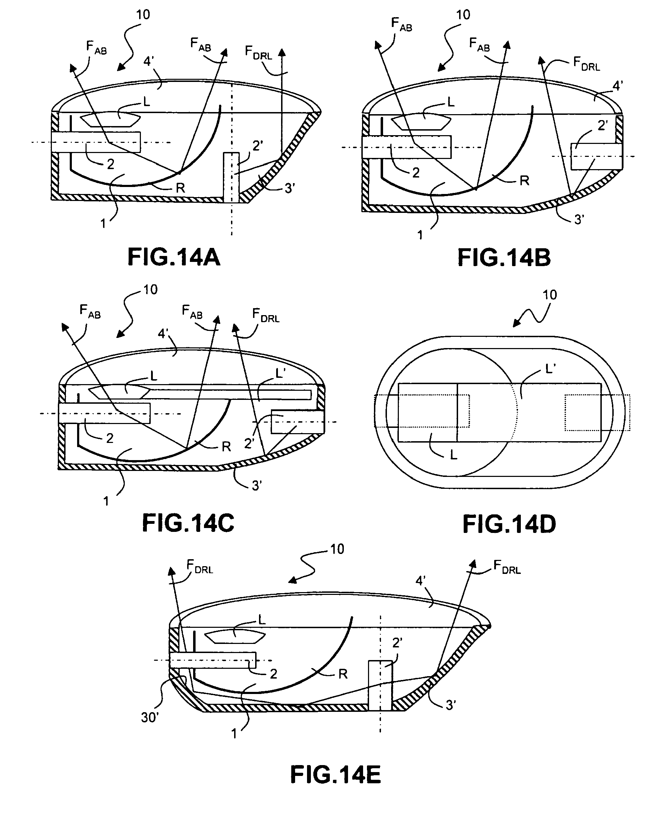

Le procédé complet consiste alors à « fresneliser » $S(0)$,puis toutes les autres coupes $S(\alpha)$, <u>pour les mêmes valeurs de z.</u> Pour <u>ces</u> valeurs de z, on « fresnelise » alors les courbes $H$ pour une épaisseur mini :emin2 < emin1. Il en résulte un maillage en pavés 10, 11 (Fig.11) suivant deux familles de courbes de $S$ : courbes 12 iso $\alpha$($\alpha$ constant) et courbes 13 iso z (z constant).

On obtient un faisceau lumineux émergent de la forme désirée.

On voit qu'une rotation autour de l'axe 2b du filament ne modifie aucune caractéristique optique (on déplace $\Pi$, qui reste tangent au filament) et revient simplement à déplacer la verticale, ce qui est la fonction de réglage nécessaire pour un projecteur antibrouillard. La lampe peut rester solidaire du boîtier.

La lentille L est avantageusement réalisée en matière plastique.

Fig.12 illustre un réseau de courbes isolux obtenues avec la source 2 et la seule lentille L. La coupure horizontale du faisceau apparaît nettement, la zone éclairée étant située au-dessous d'une ligne horizontale.

Fig.13 illustre le réseau de courbes isolux du faisceau global obtenu avec la source 2, les secteurs réflecteurs A,B,D1,D2,C et la lentille L. La coupure horizontale est conservée, avec un éclairement renforcé et étalé au-dessous de la coupure.

Un projecteur conforme à l'invention présente de nombreux avantages, notamment les suivants :

- compacité, la profondeur étant réduite ;
- possibilité d'une glace plastique du fait d'une lampe de faible puissance qui est toutefois suffisante en raison d'une répartition de lumière adaptée et d'un rendement du système optique (hors glace de fermeture) atteignant 50%,
- faisceau très mince, adapté au futur règlement R19-3.

La description effectuée à propos d'un projecteur droit se transpose immédiatement au projecteur gauche, par symétrie autour d'un plan vertical longitudinal.

En référence aux Figs. 14A à 14E, il est maintenant décrit différentes variantes d'un dispositif d'éclairage et/ou signalisation 10 intégrant un projecteur lumineux 1 selon l'invention. Le dispositif 10 décrit ici se présente sous la forme d'un projecteur offrant deux fonctions d'éclairage/signalisation automobile, à savoir, la fonction antibrouillard et la fonction de signalisation diurne (dite DRL pour « Daytime Running Light » en anglais).

Le dispositif 10 comprend un projecteur lumineux 1 selon l'invention qui est contenu dans un boîtier 3', lequel boîtier 3' étant prolongé dimensionnellement par rapport au boîtier 3 de la forme de réalisation décrite plus haut en référence aux Figs. 1 à 13. Le boîtier 3' est fermé par une glace 4'.

Ce boîtier 3' de dimensions supérieures permet de loger une autre source lumineuse 2' dédiée à la fonction de signalisation diurne. Cette source lumineuse 2' est par exemple une lampe à filament d'une puissance de 15 W.

Comme cela apparaît aux Figs. 14A à 14E, la source lumineuse 2' peut être montée de différentes manières par rapport à l'axe optique du dispositif 10. Un montage parallèle à l'axe optique (cas des Figs. 14A et 14E) est un montage transversal à l'axe optique (cas des Figs. 14B, 14C et 14D) sont représentés à titre d'exemples.

On notera ici que le réflecteur, désigné R, du projecteur 1 est représenté de manière simplifiée aux Figs. 14A à 14E, essentiellement pour des raisons de commodité. Bien entendu, le réflecteur R comporte les secteurs A, B, D1, D2 et éventuellement C, non représentés, tels que décrits précédemment.

Dans les formes de réalisation représentées du dispositif 10, la surface intérieure du boîtier 3' est adaptée à la photométrie voulue pour la fonction de signalisation diurne. Ainsi, la surface intérieure du boîtier 3' est couverte au moins en partie d'un revêtement réfléchissant qui autorise une réflexion de faisceaux lumineux $F_{DRL}$ émis par la source 2'. En variante (non représentée), un réflecteur est associé à la source 2' et il n'est alors pas indispensable de rendre réfléchissante la surface intérieure du boîtier 3'.

En référence plus particulièrement aux Figs. 14C et 14D, le dispositif 10 peut comporter une lentille L' sous la forme d'un prolongement de la lentille L du projecteur lumineux 1. Dans certaines applications, cette lentille L' apporte davantage de flexibilité dans la conception de la photométrie de la fonction de signalisation diurne.

En référence plus particulièrement à la Fig. 14E, le dispositif 10 peut comprendre un boîtier 3' ayant une partie intérieure de réflexion indirecte focalisée 30' qui permet un passage des faisceaux $F_{DRL}$ autour du réflecteur R et de la source 2. Cette caractéristique autorise l'obtention d'une surface éclairante plus importante pour la fonction de signalisation diurne.

On notera ici que la réalisation du dispositif 10 est rendue possible par la forte compacité du projecteur lumineux 1 selon l'invention. Il devient ainsi possible de proposer la fonction antibrouillard et la fonction de signalisation diurne dans un dispositif 10 dont les dimensions restent analogues à celles d'un antibrouillard classique.

On notera également que dans certaines formes de réalisation du dispositif 10, la fonction de signalisation diurne sera obtenue à l'aide des deux sources lumineuses 2 et 2', par la combinaison de faisceaux lumineux $F_{AB}$ émis par la source 2 et de faisceaux lumineux $F_{DRL}$ émis par la source 2'. Dans un tel cas, la source lumineuse 2 pourra par exemple être alimentée en sous voltage.

## Revendications

1. Projecteur lumineux, pour véhicule automobile, donnant un faisceau à coupure, en particulier du type anti-brouillard, admettant un axe optique et comprenant une source lumineuse comportant un filament dont la forme générale est sensiblement cylindrique et dont l'axe est de préférence sensiblement horizontal, ledit filament s'étendant obliquement ou perpendiculairement à l'axe optique du projecteur, et au moins un réflecteur donnant un faisceau lumineux réfléchi à coupure,
   **caractérisé en ce qu'**il comporte, devant la source lumineuse (2), une lentille (L) déterminée pour donner un faisceau lumineux à coupure, supprimant ainsi la nécessité d'un cache devant ladite source lumineuse (2).

2. Projecteur selon la revendication 1, **caractérisé en ce que** la lentille (L) est déterminée de telle manière que les rayons incidents extrêmes soient réfractés, en sortie de la lentille, sensiblement parallèlement à l'axe optique (Y-Y), tandis que les autres rayons lumineux émis par le reste de la source sont réfractés avec une inclinaison vers le bas par rapport audit axe optique.

3. Projecteur selon la revendication 1 ou 2, **caractérisé en ce que** la source lumineuse est de faible puissance et fournit un flux inférieur à celui que génère une lampe de type code, la lentille est proche de la source lumineuse et l'ensemble du projecteur est réalisé en matière plastique.

4. Projecteur selon la revendication 3, **caractérisé en ce que** la source lumineuse fournit un flux inférieur ou égal à 900 lumens, notamment inférieur ou égal à 600 lumens.

5. Projecteur selon l'une des revendications précédentes,
   **caractérisé en ce que** la source lumineuse (2) est montée fixe par rapport au boîtier (3) du projecteur.

6. Projecteur selon la revendication 5, **caractérisé en ce que** la source lumineuse est orientée sensiblement perpendiculairement à l'axe optique (Y-Y) et que les réflecteurs (A,B,D1,D2,C) et la lentille (L) sont solidaires entre eux et montés rotatifs autour de l'axe géométrique (2b) de la source lumineuse pour permettre le réglage du projecteur.

7. Projecteur selon l'une des revendications précédentes
   **caractérisé en ce que** la source lumineuse est constituée par une lampe avec filament axial (2a) et est disposée transversalement ou obliquement.

8. Projecteur selon l'une quelconque des revendications précédentes **caractérisé en ce qu'**il est réalisé en matière plastique, en particulier thermoplastique.

9. Projecteur selon l'une des revendications précédentes
   **caractérisé en ce que** la surface d'entrée (E) de la lentille (L) est plane, rectangulaire et verticale.

**10.** Projecteur selon l'une des revendications précédentes **caractérisé en ce que** la lentille (L) est dissymétrique haut et bas et de préférence courbée en vue de dessus.

**11.** Projecteur selon l'une des revendications précédentes, **caractérisé en ce que** la lentille (L) est du type lentille de Fresnel dans le sens vertical et dans le sens horizontal, et que sa face de sortie présente des pavés (8,9,10,11) permettant d'obtenir le faisceau souhaité avec une lentille d'épaisseur réduite.

**12.** Projecteur selon la revendication 11, **caractérisé en ce que** la face de sortie de la lentille (L) présente un maillage en pavés (10, 11) suivant deux familles de courbes iso α(12) et iso z(13).

**13.** Projecteur selon l'une quelconque des revendications précédentes, **caractérisé en ce que** le réflecteur comprend au moins quatre secteurs (A,B,D1,D2) dont deux premiers (A,B) s'étendent au-dessus et au-dessous du plan horizontal passant par l'axe de la source lumineuse, les deux autres secteurs (D1, D2) étant compris entre les deux premiers et situés respectivement au-dessus et au-dessous de ce plan.

**14.** Projecteur selon la revendication 13, **caractérisé en ce que** les deux premiers secteurs (A, B) sont prévus pour que les rayons réfléchis contournent les obstacles constitués par la lentille (L) et la source lumineuse (2).

**15.** Projecteur selon la revendication 14, **caractérisé en ce que** le secteur (A) situé vers l'extérieur est associé à un second secteur (C) non jointif de focale plus grande.

**16.** Projecteur selon la revendication 14 ou 15, **caractérisé en ce que** les secteurs (D1, D2) situés de part et d'autre du plan horizontal passant par l'axe de la source sont des fractions d'un unique réflecteur.

**17.** Projecteur selon la revendication 16, **caractérisé en ce que** les secteurs (D1, D2) ont une focale inférieure à celle des premiers secteurs (A,B) de sorte que les surfaces des secteurs (D1, D2) soient placées en avant des secteurs latéraux, en particulier pour réaliser des raccords placés dans l'ombre des secteurs haut et bas et ne créant pas d'éblouissement.

**18.** Projecteur selon l'une des revendications précédentes, **caractérisé par le fait que** les focales des secteurs (A,B,D1,D2,C) sont inférieures ou égales à 15 mm.

**19.** Dispositif d'éclairage et/ou de signalisation pour véhicule automobile **caractérisé en ce qu'**il comprend un projecteur lumineux selon l'une quelconque des revendications 1 à 18 et au moins une source lumineuse supplémentaire dédiée à la réalisation d'une autre fonction d'éclairage et/ou signalisation.

**20.** Dispositif selon la revendication 19, **caractérisé en ce que** ledit projecteur lumineux réalise une fonction d'anti-brouillard et ladite autre fonction d'éclairage et/ou signalisation est une fonction de signalisation diurne.

**21.** Dispositif selon la revendication 19 ou 20, **caractérisé en ce que** ladite source lumineuse supplémentaire est montée parallèlement ou transversalement à l'axe optique dudit dispositif.

**22.** Dispositif selon l'une quelconque des revendications 19 à 21, **caractérisé en ce qu'**il comprend un boîtier avec une surface intérieure ayant au moins une partie réfléchissante apte à réfléchir des faisceaux lumineux émis directement ou indirectement par ladite source lumineuse supplémentaire.

**23.** Dispositif selon l'une quelconque des revendications 19 à 22, **caractérisé en ce qu'**il comprend une lentille associée à ladite source lumineuse supplémentaire et formant un prolongement de la lentille dudit projecteur lumineux.

**24.** Véhicule automobile **caractérisé en ce qu'**il comprend au moins un projecteur lumineux selon l'une quelconque des revendications 1 à 18.

FIG.1

FIG.2

FIG.3

FIG.12

FIG.13

FIG.4

FIG.5

FIG.6

FIG.7

FIG.8

FIG.9

FIG.10

FIG.11

**FIG.14A**

**FIG.14B**

**FIG.14C**

**FIG.14D**

**FIG.14E**

Office européen
des brevets

**RAPPORT DE RECHERCHE EUROPEENNE**

Numéro de la demande

EP 05 29 2091

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 744 199 A (ROBERT BOSCH GMBH) 1 août 1997 (1997-08-01) * page 5, ligne 1 - ligne 38 * * figures 1,2 * | 1-5 | F21V7/00 F21V5/00 B60Q1/00 |
| Y | | 19-24 | |
| Y | US 6 650 058 B1 (WANG CALVIN) 18 novembre 2003 (2003-11-18) * abrégé * * colonne 2, ligne 1 - ligne 8 * * colonne 3, ligne 31 - ligne 44 * * figures 1,2 * | 19-24 | |
| A | | 1 | |
| Y | EP 1 213 532 A (STANLEY ELECTRIC CO., LTD) 12 juin 2002 (2002-06-12) * colonne 42, ligne 31 - colonne 46, ligne 27 * * figures 8-11 * | 1-5,7-18 | |
| Y | US 5 791 759 A (DASSANAYAKE ET AL) 11 août 1998 (1998-08-11) * colonne 1, ligne 40 - ligne 61 * * colonne 2, ligne 10 - ligne 54 * * colonne 3, ligne 6 - colonne 4, ligne 59 * * colonne 5, ligne 34 - ligne 56 * * figures 3,4,6-8 * | 1-5,7-18 | DOMAINES TECHNIQUES RECHERCHES (IPC) F21S F21V F21M B60Q |
| A | FR 2 637 046 A (KOITO MANUFACTURING CO LTD) 30 mars 1990 (1990-03-30) * page 2, ligne 12 - page 3, ligne 2 * * page 8, ligne 16 - page 11, ligne 11 * * figures 4-8 * | 1-5,8, 13,14, 16-18 | |

-/--

Le présent rapport a été établi pour toutes les revendications

| Lieu de la recherche | Date d'achèvement de la recherche | Examinateur |
|---|---|---|
| La Haye | 30 janvier 2006 | Cosnard, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen**

**des brevets**

**RAPPORT DE RECHERCHE EUROPEENNE**

Numéro de la demande

EP 05 29 2091

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 433 999 A (VALEO VISION; RENAULT S.A.S) 30 juin 2004 (2004-06-30) * alinéas [0016], [0017], [0022], [0023], [0037], [0039], [0046] * * figures 1-6 * ----- | 1-8,18 | |
| A | US 3 184 592 A (CIBIE PIERRE) 18 mai 1965 (1965-05-18) * colonne 2, ligne 65 - colonne 3, ligne 22 * * figures 1-3 * ----- | 1,5,6 | |
| A | DE 100 30 362 A1 (VOLKSWAGEN AG) 3 janvier 2002 (2002-01-03) * abrégé * ----- | 1,19-21 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 30 janvier 2006 | Cosnard, D |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**EP 1 655 535 A1**

## ANNEXE AU RAPPORT DE RECHERCHE EUROPEENNE
## RELATIF A LA DEMANDE DE BREVET EUROPEEN NO.

EP 05 29 2091

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-01-2006

| Document brevet cité au rapport de recherche | | Date de publication | Membre(s) de la famille de brevet(s) | | Date de publication |
|---|---|---|---|---|---|
| FR 2744199 | A | 01-08-1997 | DE | 19602978 A1 | 31-07-1997 |
| | | | JP | 9213103 A | 15-08-1997 |
| | | | US | 5961206 A | 05-10-1999 |
| US 6650058 | B1 | 18-11-2003 | AUCUN | | |
| EP 1213532 | A | 12-06-2002 | US | 2002085387 A1 | 04-07-2002 |
| US 5791759 | A | 11-08-1998 | AUCUN | | |
| FR 2637046 | A | 30-03-1990 | DE | 3932273 A1 | 05-04-1990 |
| | | | GB | 2223566 A | 11-04-1990 |
| | | | JP | 2090401 A | 29-03-1990 |
| | | | JP | 2517368 B2 | 24-07-1996 |
| | | | US | 4953063 A | 28-08-1990 |
| EP 1433999 | A | 30-06-2004 | FR | 2849159 A1 | 25-06-2004 |
| | | | JP | 2004207245 A | 22-07-2004 |
| | | | US | 2004240223 A1 | 02-12-2004 |
| US 3184592 | A | 18-05-1965 | US | 3184591 A | 18-05-1965 |
| DE 10030362 | A1 | 03-01-2002 | AUCUN | | |

EPO FORM P0460

Pour tout renseignement concernant cette annexe : voir Journal Officiel de l'Office européen des brevets, No.12/82